(19) **Europäisches Patentamt**

**European Patent Office**

**Office européen des brevets**

(11) **EP 1 039 314 A2**

(12) **EUROPEAN PATENT APPLICATION**

(43) Date of publication:
27.09.2000 Bulletin 2000/39

(51) Int. Cl.$^7$: **G01S 17/89**, G01S 17/08, G01S 17/02, B60R 21/01

(21) Application number: 00105426.1

(22) Date of filing: 15.03.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 22.03.1999 US 273829

(71) Applicant: **EATON CORPORATION
Cleveland, Ohio 44114-2584 (US)**

(72) Inventors:
• **Almajed, Zeyad
Greenfield, Wisconsin 53220 (US)**
• **Janutka, William Joseph
West Allis, Wisconsin 53227 (US)**
• **Taranowski, Michael George
Greendale, Wisconsin 53129 (US)**

(74) Representative:
**Wagner, Karl H., Dipl.-Ing. et al
WAGNER & GEYER
Patentanwälte
Gewürzmühlstrasse 5
80538 München (DE)**

(54) **Electronic optical target ranging and imaging**

(57) A system for optically ranging and three dimensionally imaging of an object. For ranging only a single photodetector can detect light reflected from the object when alternately illuminated by a pair of strobed sources or a shutter strobed direct and virtually imaged single source of light. The detector output signal for each illumination has the ambient only light intensity signal subtracted therefrom and the ratio of direct to virtually imaged light computed and the distance of the object determined from the ratio. For imaging an array of detectors is used and the computed distances mapped using the detector coordinates to give a three dimensional image. Light in the range 350 to 14000 nanometers wavelength is preferred. The system is particularly suitable as a vehicle occupancy sensor and the image used to generate an airbag inflation suppression signal if the image indicates non-acceptable occupant characteristics or position.

Fig.1

## Description

CROSS-REFERENCE TO RELATED APPLICATIONS

Not Applicable

STATEMENT REGARDING FEDERALLY SPONSORED RESEARCH OR DEVELOPMENT

Not Applicable

MICROFICHE APPENDIX

Not Applicable

BACKGROUND OF THE INVENTION

The present invention relates to devices for optically ranging and mapping a stationary object. The invention has application in such devices for determining the presence and position of a human seat occupant in a vehicle. In providing automotive passenger collision protection, particularly with inflatable air bags, it has been found necessary to control the amount or rate of airbag inflation in accordance with the position of the occupant with respect to the air bag mounting structure at the time of inflation. It has also been required to determine the physical size and configuration of the occupant in order to prevent bodily harm in the event of airbag inflation which is too sudden or too powerful for the size of the occupant. Such problems have been encountered with the presence of children and petite or small adults in the front passenger seat of the vehicle.

Thus, it has been desired to provide a reliable and low cost way or means of detecting the location or range, size and position of an object and particularly the occupant of a vehicle front passenger seat in a manner from which sufficient information can be obtained to provide the correct rate or suppression of airbag inflation for protecting the occupant. Heretofore, it has been proposed to use weight sensing devices in the seat to determine the mass of the occupant in the passenger seat and to deduce from the weight the size of the occupant. However, such weight sensors in the seat do not provide any information as to the relative position of the occupant with respect to the airbag, nor any direct information as to the size and shape of the occupant. Accordingly, it has been desired to provide other ways or means of determining the configuration and relative position of the occupant's body with respect to the airbag at the time of the collision.

It has been suggested to employ a pair of video cameras for three dimensional monitoring of the occupant position in real time during vehicle operation; however, such techniques have been found to be prohibitively bulky and obtrusive for installation in the vehicle and also have been considered prohibitively costly for high-volume, mass production of motor vehicles.

Thus, it has been desired to provide a low cost, compact, simple and easy to install sensor for determining the size and position of an object such as a passenger in a motor vehicle in a seat position which is protected by an inflatable airbag.

BRIEF SUMMARY OF THE INVENTION

It is an object of the present invention to provide a simple, relatively low cost system or device for optically ranging of an object with a single camera or photodetector.

It is a further object of the present invention to provide single camera optical ranging and mapping of an object in real time for three dimensional imaging of the object.

It is a further object of the invention to provide optical ranging and mapping and three dimensional imaging of an object with a single photodetection device which is suitable for real time monitoring of the size and position of the occupant of a motor vehicle in a seating position which is protected by an airbag.

It is a further object of the present invention to provide optical ranging and three dimensional image mapping by a plurality of photodetecting pixels disposed in an array on a solid state device.

It is a further object of the present invention to provide optical ranging and three dimensional image mapping by a single camera in real time and to provide an electrical signal therefrom which may be employed for controlling the inflation of an airbag for vehicle occupant collision protection.

The present invention utilizes a single camera having at least one photodetector for ranging. For imaging, preferably an array of solid state pixel photodetectors is employed for receiving and electronically mapping as a three dimensional image light reflected from an object sequentially illuminated by a pair of light sources. The solid state photodetectors provide electrical signals which may be employed by an electronic computer for a multiplicity of purposes, particularly for providing a signal for suppressing inflation of a vehicle occupant protection airbag.

In the presently preferred practice of the invention, the sources of illumination emit light, the spectrum having a wavelength in the range of about 350 to 14000 nanometers.

BRIEF DESCRIPTION OF THE DRAWINGS

FIG. 1 is a perspective view of a module containing the light sources and for illuminating and for detecting reflected light from an object as embodied in the present invention;
FIG. 2 is a top view of the arrangement of FIG. 1;
FIG. 3 is an enlarged section view of a portion of the camera arrangement of FIG. 1;

FIG. 4 is a side view of a motor vehicle passenger seat having an occupant with having the invention installed as an occupant position detector;

FIG. 5 is a top view of the occupant seat portion of the vehicle of FIG. 4;

FIG. 6 is a view similar to FIG. 4 showing an alternate location for the illumination and camera module of the present invention as used in a vehicle for occupant position detecting;

FIG. 7 is an optical diagram for creating a virtual image of a light source further from the location of the actual light source using a lens as embodied in the present invention;

FIG. 8 is an optical diagram showing the creation of a virtual image of the light source remote from the physical location of the light source embodying a mirror;

FIG. 9 is an optical diagram of another embodiment of the present invention employing a single light source and a rotating shutter for alternately directing light from a spherical mirror and a reflecting minor to create a virtual image of the light source a distance from the object greater than the actual location of the light source;

FIG. 10 is an enlarged detail of the rotating shutter of the embodiment of FIG. 9;

FIG. 11 is a perspective view of an alternate embodiment of the invention employing a rotating shutter with a lens and an aperture;

FIG. 12 is an enlarged view of an active CMOS pixel array employed for the photodetector of the present invention;

FIG. 13 is a view similar to FIG. 12 of a passive CMOS pixel array;

FIG. 14 is a block diagram of the system algorithm of the present invention for ranging and for mapping and three dimensional imaging an object with dual light sources and a single photodetector array; and,

FIG. 15 is a block diagram of the algorithm of the system as employed for a vehicle occupant position sensor.

FIG. 16 is a block diagram of the electrical circuitry functions for the system of the present invention employed for vehicle occupant sensing and air bag suppression.

## DETAILED DESCRIPTION OF THE INVENTION

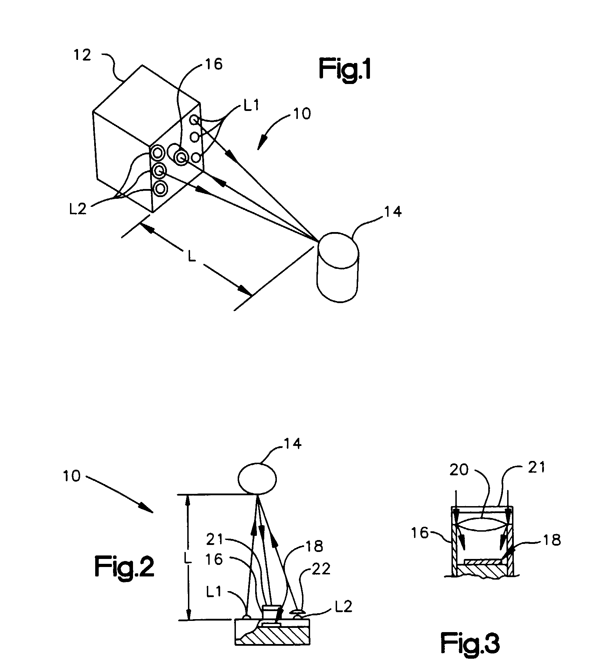

Referring to FIG. 1, the system of the present invention is indicated generally at 10 and includes a camera module 12 disposed a predetermined distance L from an object 14 to be ranged only or both ranged and imaged. The module 12 includes a plurality of sources of illumination denoted L1, L2 disposed preferably in spaced relationship on opposite sides of a camera 16 which in the presently preferred practice of the invention utilizes at least one photodetector for ranging only and for imaging a plurality of photodetectors indicated generally at 18 and which will be hereinafter described in greater detail, and a focusing lens 20 for ranging and mapping for three dimensional imaging of object 14.

Although the sources L1, L2 of illumination are illustrated in the embodiment 10 of FIGS. 1 and 2 as disposed at a common station or distance L from the object 14, it will be understood that this is done for the sake of convenience and compactness which is the case for an automotive vehicle occupancy sensor application of the present invention. It will be understood however sources L1, L2 may be located at different distances from the object for other applications where space permits.

In the presently preferred practice of the invention, the system 10 of the present invention which is of the type intended for a vehicle automotive occupancy sensor application, a lens 22 is disposed adjacent source L2 and located between source L2 and the object 14 for providing a virtual image of the source L2 to the object as will hereinafter be described. It will be understood that for applications where source L1 and L2 are located at different distances from the object, the lens 22 is not needed.

Referring to FIGS. 2 and 3, the camera 16 preferably employs a suitable optical filter 21 in front of the lens 20 to improve the signal-to-noise ratio of the reflected light from the object 14.

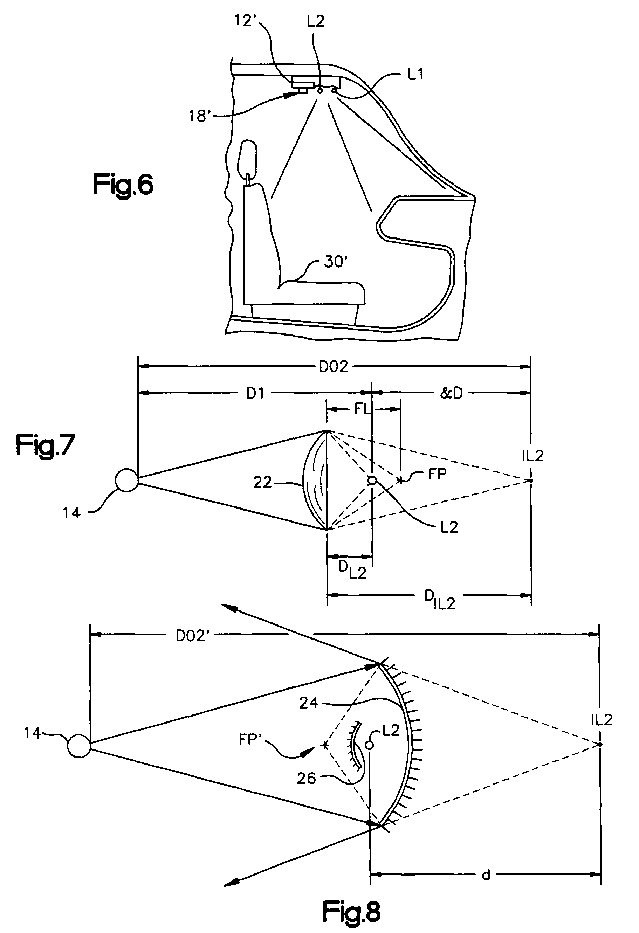

Referring to FIG. 7, lens 22 has a focal point denoted by the reference characters FP which is further distant from the lens 22 than the source L2 which is indicated a distance $D_{L2}$ from lens 22. The rays from source L2 passing through the lens would be viewed by an observer located at the object 14 as emanating from the virtual image having a location at IL2 as shown in FIG. 7 and denoted a distance $D_{IL2}$ from lens 22. The virtual image IL2 is located a distance *d from the source L2 and a distance DO2 from the object 14. Thus, the lens 22 creates the effect that the object 14 is illuminated by source L2 as if L2 were physically located at the distance DO2 from the object 14 ($D_{IL2}$ from lens 22) as opposed to the distance D1 (L in FIG. 1 and FIG. 2) at which both sources L1, L2 are physically located.

As understood by those skilled in the art, the illumination of an object by a light source is inversely proportional to the square of the distance from the source and directly proportional to the intensity of the source. Thus, if sources L1 and L2 are of the same intensity and wavelength, the object 14 will be illuminated in the arrangement of FIG. 2 as if source L1 were at a distance L and source L2 at a distance DO2 from object 14. It will be further understood that the illumination of object 14, at any instant in time or frame, is a sum of the ambient light and the light from either source L1 or L2, which are illuminated sequentially or alternately.

The present invention obtains range and image information by recording the intensity of illumination of the object 14 with only ambient light and records the signal output of the photodetectors 18. Subsequently the sources L1, L2 are alternately energized for a brief instant, which in the present practice of the invention an interval of ten milliseconds has been found satisfactory; and, the output of the photodetectors 18 for illumination by each of the sources L1, L2 is converted to digital form and stored in memory. The output of the photodetectors 18 previously obtained with only ambient light may then be subtracted from each of the photodetector outputs for illumination by sources L1, L2 respectively. The ratio of the squares of the value for the signals obtained by the subtraction for each source illumination may be computed. This ratio may then be used to compute the distance of the object from the photodetectors inasmuch as the ratio of the illumination will vary in accordance with the distance of the object from the photodetectors.

The computations for a given pixel are set forth as follows.

Referring to FIG. 7, for a given lens 22 having focal point FP located a distance FL from the lens and source L2 located a distance $D_{L2}$ from the lens, the distance of the virtual image IL2 from the lens $D_{IL2}$ is

$$D_{IL2} = \left| \frac{FL \times D_{L2}}{FL - D_{L2}} \right|$$

If L12 is at the same actual distance D1 from the object, the difference in virtual distance is computed as

$$*D = D_{IL2} - D_{L2}$$

The light received on a given photodetector or pixel can be described by the following expression:

$$I_{px} = I_\alpha + \frac{K}{d^2},$$

while $I_\alpha$ is the intensity of light received without either source L1, L2, and the term $K/D^2$ is a function of an illumination source at a distance d from the object. The factor K is a known empirically determined function of illumination intensity and object reflectivity. Rearranging the foregoing gives

$$I_{px} - I_\alpha = \frac{K}{d^2} \text{ and, } d = \sqrt{\frac{K}{(I_{px} - I_\alpha)}}.$$

Given the two sources L1, IL2 at distances D1 and D02 respectively from the object, the actual distance to the object can be calculated if the sequential illumination measurements (frames) are taken and the distance between L1 and IL2 are known:

$$D1 = \sqrt{\frac{K}{(I_{PX_{L1}} - I_\alpha)}} \; ; \; D02 = \sqrt{\frac{K}{(I_{PX_{IL2}} - I_\alpha)}}$$

The ratio is then taken to eliminate the reflectivity term.

$$\frac{D1}{D02} = \frac{\sqrt{\frac{K}{(I_{PX_{L1}} - I_\alpha)}}}{\sqrt{\frac{K}{(I_{PX_{IL2}} - I_\alpha)}}} \; ;$$

$$\frac{D1}{D02} = \sqrt{\frac{(I_{PX_{IL2}} - I_\alpha)}{(I_{PX_{L1}} - I_\alpha)}}$$

From FIG. 7 it is seen that *D = D02 - D1 or D1 = D02 - *D

Therefore, substituting,

$$\frac{D02 - \delta D}{D02} = \sqrt{\frac{(I_{PX_{IL2}} - I_\alpha)}{(I_{PX_{L1}} - I_\alpha)}}$$

so the distance D02 can be written in terms of *D:

$$D02 = \frac{-\delta D}{\left\{ -1 + \sqrt{\frac{(I_{PX_{IL2}} - I_\alpha)}{(I_{PX_{L1}} - I_\alpha)}} \right\}}$$

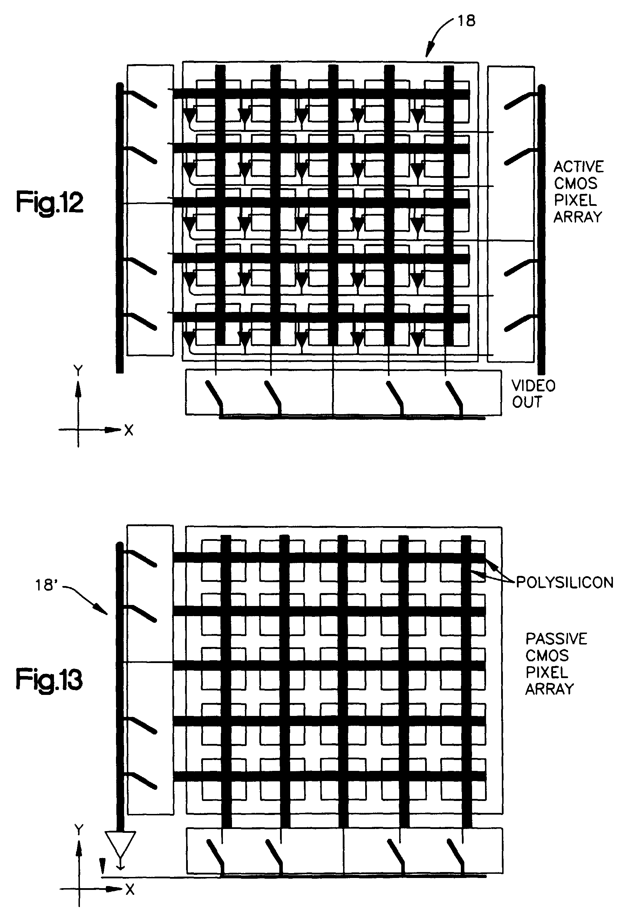

In the present practice, for a vehicle occupant sensor where mapping and imaging are desired, the photodetectors are preferably an array of pixels, comprising either an active solid state array 18 shown in FIG. 12 or a passive solid state array 18' shown in FIG. 13, arranged on a solid state CMOS device. Each of the pixels shown in the arrays illustrated in FIGS. 12 and 13 thus has a pair of Cartesian coordinates X, Y which may be used to create a map of the intensities of light reflected from the object 14 at the particular coordinates for each pixel. The intensity of the reflected light from object 14 will vary for each pixel dependent upon the shape of the object and the distance of the discrete point on the object corresponding to the X, Y coordinate for a given pixel. Thus, the distance determined from the computed value of the ratio of the intensities for a given pixel, being a function of the distance of the portion of the target from which the reflected light is received by the pixel, may be mapped, using the coordinates of the pixel, to give a three dimensional image of the object.

The present invention thus provides a simple and relatively low cost technique for ranging an object utilizing alternately energized sources of illumination and at least one photodetector which may comprise one or a plurality of pixels on a common solid state device. Additionally, if a plurality of photodetectors are employed preferably in an array, three dimensional imaging of the object may be accomplished.

Referring to FIG. 8, an alternate arrangement of the virtual source IL2 is illustrated wherein lens 22 is replaced by a concave mirror 24 which has the source L2 disposed between the focal point of the minor FP'; and, a shield 26 is provided for preventing light from the source L2 from illuminating the object 14 directly. Mirror 24 has a virtual image IL2' which is a significant distance behind the mirror from the physical location of source L2, thus creating an apparent greater distance DO2' of the source L2 from object 14.

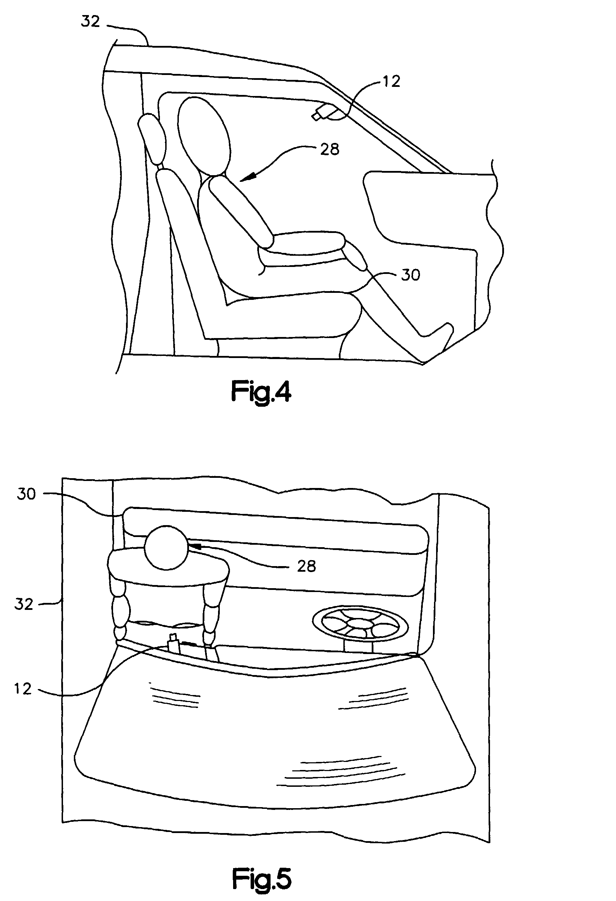

Referring to FIGS. 4 and 5, the present invention is shown applied as an occupant position sensor for ranging and imaging an occupant, denoted generally at 28, seated in the front seat 30 of a motor vehicle 32 with the camera module 12 disposed on the vehicle in front of the occupant and above the windshield. In a further alternative arrangement, the module 12 may be located on the vehicle headliner above the occupant seat 30' as shown in FIG. 6. In the arrangement of FIG. 6, the sources of light L1, L2 are alternatively disposed on one side of the photodetector 18'.

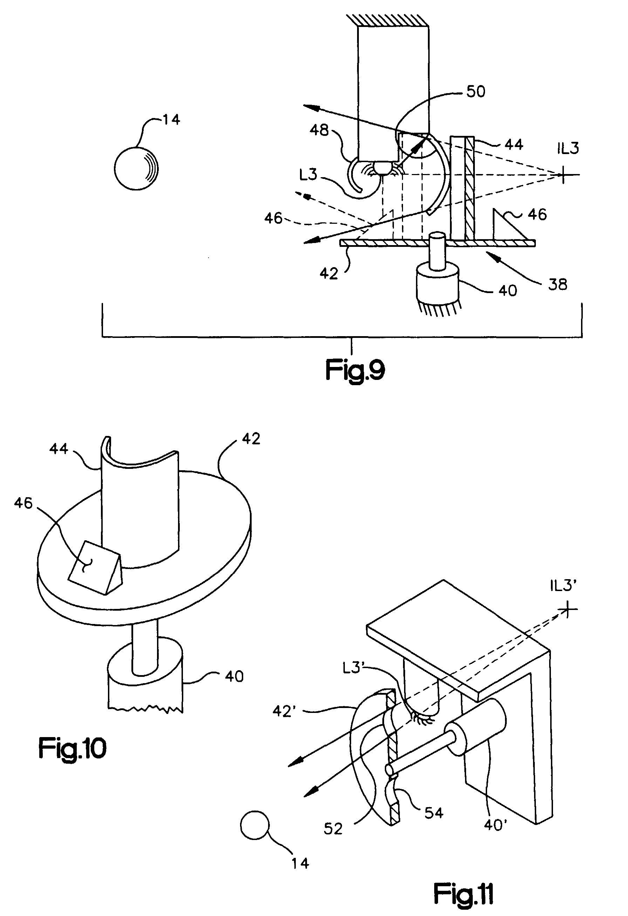

Referring to FIGS. 9 through 11, an alternative arrangement of the invention is shown utilizing only a single source of illumination L3 with a rotating shutter assembly, indicated generally at 38, which includes a motor 40 connected to rotate wheel 42 which has mounted thereon a curved generally non-reflecting or blackened shield 44 and a planar reflecting mirror 46 aligned on a common radius of the wheel 42 and on the same side of the center of the wheel. The source L3 has a stationary shield 48 disposed to prevent direct illumination of target 14 by L3; and, a concave mirror 50 is disposed on the opposite side of L3 from shield 48 such that upon energization of the source L3, object 14 is illuminated by rays reflected from concave mirror 50. The object 14 in the arrangement of FIG. 9 is illuminated as if the source L3 were located at the virtual image point IL3 which is significantly further from the object 14 than the physical location of L3. This is the condition of the system with the wheel 42 shown in the position in solid outline in FIG. 9 wherein mirror 46 and shield 44 are rotated behind concave mirror 50.

With the wheel 42 rotated to a position where shield 44 and mirror 46 are located in the position shown in dashed outline in FIG. 9, mirror 50 is isolated from source L3 by shield 44; and, light from L3 is reflected from planar mirror 46 to illuminate the object 14 in a manner which is almost direct illumination. Thus, rotation of the shutter wheel 42 produces alternate illumination of the object 14 from the physical location of single source L3 and from the virtual location at IL3.

Referring to FIG. 11, another alternative arrangement of single source illumination from a lamp L3' is illustrated wherein a lens 52 is mounted on a rotating shutter wheel 42' driven by motor 40', with the lens 52 disposed diametrically opposed on wheel 42' from an aperture 54. Rotation of wheel 42' thus permits illumination of the object 14 alternately by direct illumination through aperture 54 and by light passing through lens 52 and which has a virtual image point IL3' a significant distance behind lens 52 such that the intensity of illumination of object 14 is substantially different through lens 52 and aperture 54 from the single source L3'.

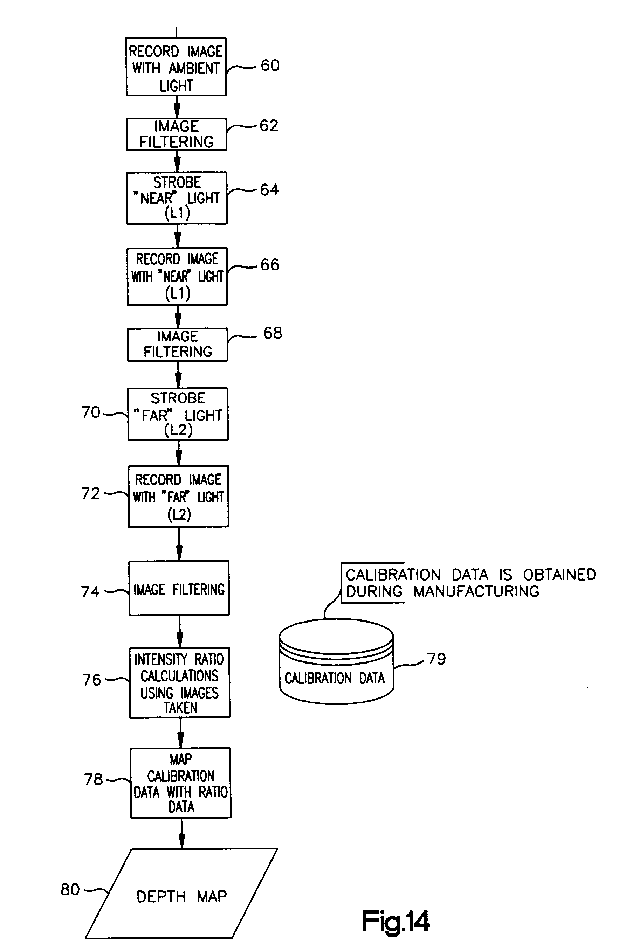

Referring to FIG. 14, operation of the system is shown in block diagram form wherein the intensity of the illumination of object 14 with only ambient light is detected by the photodetectors 18 at step 60. The ambient light is then filtered at step 62 for intensities known to be optically insignificant.

The system then proceeds to strobe or energize source L1 for a selected interval at step 64 which may be chosen sufficiently short to insure that no significant movement of the object occurs during illumination. In the present practice of the invention, a period of ten milliseconds has been found satisfactory for a vehicle occupant sensor application; however, other time periods may be used as the application warrants. The system proceeds to step 66 and records the intensity of the reflected light received from the object for each pixel in the array 18.

Referring to FIG. 14, the system proceeds to step 68 and performs a digital filtering operation to remove the effects of ambient light for the values of the signals produced by each of the pixels. The system then proceeds to step 70 and energizes or strobes the source L2 for illuminating the object 14 and with the source L1 turned off. The system then proceeds to step 72 and stores in memory digital signals formed from the output signals of each of the pixels during the illumination of step 70 for source L2.

The system then proceeds to step 74 and performs a digital filtering operation to subtract or remove the stored value of the signal for ambient light for each of the pixels to thus produce the stored values of the signal representative only of the illumination of source L2.

The system then proceeds to step 76 and performs computations for computing the distance D02 ratio of the signals stored for each pixel for illumination with respectively L1, L2 and proceeds to step 78 to map the distances determined in step 76 using the coordinates for each pixel thereby creating a three dimensional image of the object at step 80. The system in the performance of the operations at step 78 compares the computed values with calibrated data stored in memory from manufacturing operations which is shown in FIG. 14 as data obtained from calibration data stored in memory at step 79.

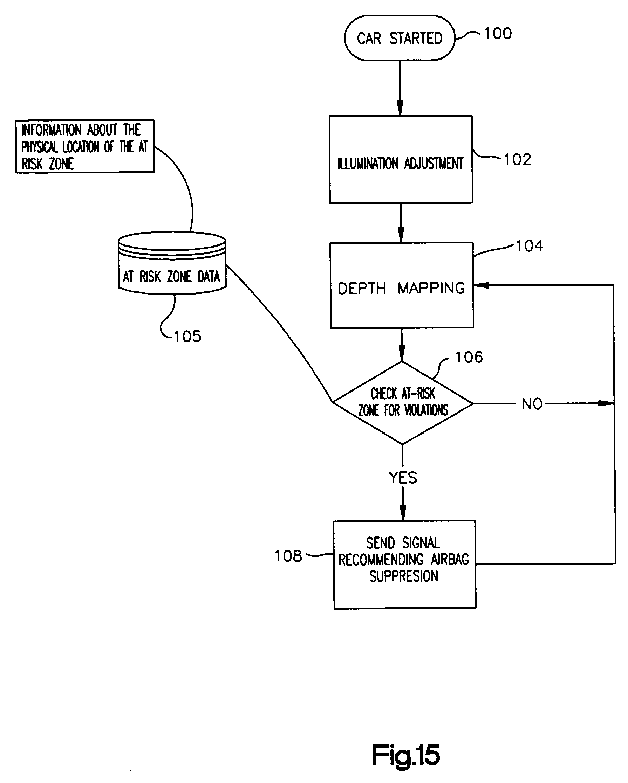

Referring to FIG. 15, the operation of the system is shown in a flow diagram for the application of the present invention in a motor vehicle seat occupant position sensing application wherein the system in the vehicle is responsive to vehicle startup at step 100 to perform an adjustment at step 102 on the sources L1, L2 based upon ambient data recorded at step 60.

The system proceeds to perform the depth mapping operation 60 through 80 of FIG. 14 at step 104 and proceeds to step 106 and tests for an at-risk condition based upon data input to the system from memory at step 105. If the test in step 106 is affirmative the system proceeds to step 108 and generates a signal to the airbag inflator control system recommending airbag suppression. The system then returns to step 104.

If, however, the determination at step 106 is negative, the system recycles to step 104.

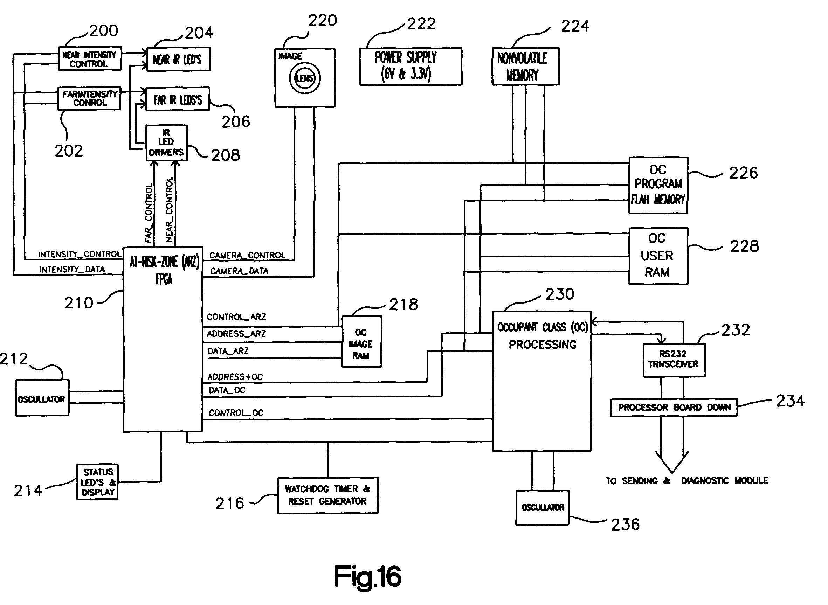

Referring to FIG. 16, the function of the electrical system of the present invention as embodied in a vehicle occupancy sensor application is illustrated in block diagram form and will be described hereinafter.

The system captures images of a predefined area within a vehicle passenger compartment, stores the image data in memory and processes the image data using software programmed into electronic circuitry devices such as a microprocessor. The image data processing provides a classification of the vehicle front seat passenger side occupant and a determination of whether an object in this seat is in the "At-Risk-Zone". If this is the case, the system will instruct an external device to suppress or enable activation of the passenger side airbag inflater.

During the manufacturing process, vehicle-specific information is programmed into the non-volatile memory 224. At system power up, the occupant classification processor 230 reads the contents of the non-volatile memory 224 and sets system operating parameters in the processor 230 and the At-Risk-Zone Field Programmable Gate Array (FPGA) 210.

The FPGA 210 instructs the camera 220 to take "pictures". The picture data is routed from the camera 220 through the FPGA 210 and is stored in the FPGA internal RAM memory and OC image RAM 218 memory. When a complete picture frame(s) has been stored in the OC image RAM 218, the FPGA 210 notifies the optical coupler (OC) 230. The OC 230 processes the picture data in OC image RAM 218 and determines the classification of the passenger-side occupant. OC image RAM 218 data is routed through the FPGA 210 and on to the OC data bus during OC data processing. The FPGA 210 processes picture data from its internal RAM memory to determine if an object is in the At-Risk-Zone. As a result of the OC and FPGA picture data processing, the system will send a message to an external device via an on-board transceiver 232 and processor board connector 234 recommending whether to suppress or enable activation of the passenger size airbag inflater.

The system contains illumination circuitry to illuminate the passenger compartment of the automobile consisting of IR LED drivers 208, Near Intensity Control 200, Far Intensity Control 202, Near Infrared LEDs 204 and Far Infrared LEDs 206. It will be understood that the LEDs 204 and 206 correspond to the sources of illumination L1, L2 described hereinabove. The signal FAR-CONTROL turns ON/OFF the Far Infrared LEDs 206 by gating the appropriate IR LED drivers 208. The signal NEAR-CONTROL turns ON/OFF the Near Infrared LEDs 206 by gating the appropriate IR LED drivers 208. An internal register within the FPGA 210 controls the logic state of these signals. The OC 230 writes the contents of this register. The signals INTENSITY-CONTROL and INTENSITY-DATA are used to control the amount of current sourced to the infrared LEDs. An internal register within the FPGA 210 controls the logic state of these signals. The OC 230 writes the contents of this register.

The FPGA 210 controls the state of (external) status LEDs 214. An internal register within the FPGA 210 controls the logic state of these signals. The OC 230 updates the contents of this register.

The FPGA 210 generates the appropriate timing and control signals during OC 230 read or write accesses to peripheral devices. The OC 230 picture data processing software program and other software programs reside in the Flash ROM Memory 226. The extraneous RAM memory space required by the OC is provided in the OC user RAM 228. The clock signals required by the internal circuitry of the FPGA and OC are derived from oscillator circuits 212 and 236 respectively. The non-volatile memory 224 is also used to store system fault codes. On-board power supply 222 generates the five volt and 3.3 volt power signals required by the various system circuitry components.

The present invention thus provides in its simplest form a unique and novel system for optically ranging an object utilizing a single photodetector with alternately strobed sources of illumination and computes the ratio of the light received at the detector and makes a determination as to the range of the object reflecting to the detector. In another embodiment a plurality of photodetectors are used; and, alternate strobing of the light source enables the system to digitally map the distances computed from the ratio of the light received by each detector when so strobed to enable mapping to create a three dimensional image of the object. The system of the present invention may be operated with the sources of illumination spaced physically at different distances from the illuminated object or co-located with reflecting lenses or mirrors employed to create a virtual image of one of the sources to induce the effect of differences in distance of the sources from the illuminated object. In an alternative embodiment, a single source of illumination is employed with shuttering for alternate transmission of the light from the source through either a lens or mirror to the object to create a virtual distance other than the physical location of the source and through a simple aperture for direct illumination. Light in the range of about 350 to 14000 nanometers wavelength is preferably employed from sources L1, L2, L3.

Although the invention has hereinabove been described with respect to the illustrated embodiments, it will be understood that the invention is capable of modification and variation and is limited only by the following claims.

**Claims**

1. A method of optically ranging and imaging an object comprising:

    (a) disposing a first source of light a certain distance from said object and illuminating said object with said first source of light;
    (b) disposing a second source of light a distance from said object virtually different from said certain distance and illuminating said object with said second source;
    (c) disposing a plurality of photodetectors in an array for detecting light reflected from said object, and generating an electrical signal indicative of the intensity of the reflected light detected by said detectors;
    (d) alternately energizing said first and second source and focusing reflected light from the object onto said detector;
    (e) storing the values of said generated electrical signals when said object is first illuminated with one of said first and second source and then with the other of said first and second source; and,
    (f) computing the ratio of said generated signal values for detector when illuminated with said one and then the other of said sources and computing from said ratio the object distance from said detector and mapping said computed distances as an image of said object.

2. The method defined in claim 1, wherein said step of illuminating said object includes illuminating with light having a wavelength in the range of about 350 to 14000 nanometers.

3. The method defined in claim 1, wherein said step of disposing photodetectors includes disposing said plurality of detectors in any array.

4. The method defined in claim 1, wherein said step of disposing said photodetectors includes disposing an array of pixels in an integrated solid state device.

5. The method defined in claim 1, wherein said step of virtually disposing said second source a predetermined distance virtually different includes disposing a lens between said second source and said object.

6. The method defined in claim 1, wherein said step of mapping includes converting said electrical signals from analog to digital form.

7. The method defined in claim 1, wherein said step of disposing photodetectors includes disposing said array of detectors intermediate said first and second sources.

8. The method defined in claim 1, wherein said step of focusing includes passing said reflected light through a lens.

9. The method defined in claim 1, wherein said step of focusing includes reflecting said light from said object with a mirror.

10. The method defined in claim 1, wherein said step of focusing includes passing said reflected light through an aperture.

11. The method defined in claim 1, wherein said step of illuminating includes reflecting light from one of said first and second source with a mirror.

12. The method defined in claim 1, wherein said step of disposing said photodetectors includes disposing an array of pixels on solid state device selected from the group consisting of (a) a charge coupled device and (b) a CMOS device.

13. The method defined in claim 1, wherein said step of disposing said photodetectors includes disposing a solid state device selected from the group consisting of (a) an active pixel array sensor and (b) a passive pixel array sensor.

14. A system for optically ranging and imaging an object comprising:

    (a) a first light source disposed a certain distance from said object and operative for illuminating said object;
    (b) a second light source disposed a distance from said object virtually different from said certain distance and operative for illuminating said object;
    (c) means operable for alternately energizing said first and second sources;
    (d) a plurality of photodetectors and means for focusing light reflected from said object on said detectors with each detector operative to provide an electrical signal indicative of the intensity of the light received thereon;

(e) means operative for storing the values of said signal for each detector for each illumination;

(f) means operative for computing the ratio of said values of said signal for said first and second source illumination for each detector;

(g) means operative for computing the object distance from each of said detectors for each of said computed signal ratios; and,

(h) means operative for mapping said computed distances and imaging said object.

15. The system defined in claim 14, wherein said first and second sources emit light in the visible spectrum.

16. The system defined in claim 14, wherein said first and second sources emit light in the infrared spectrum.

17. The system defined in claim 14, wherein said first and second sources emit light in the range of about 350 to 14000 nanometers wavelength.

18. The system defined in claim 14, wherein said array of photodetectors comprises pixels on a silicon solid state device.

19. The system defined in claim 14, wherein said array of photodetectors comprise pixels on a CMOS solid state device.

20. The system defined in claim 14, wherein said means operative for storing includes an analog to digital converter.

21. The system defined in claim 14, wherein said second light source has a lens disposed between said second source and said object for effecting said virtual distance different from said certain distance.

22. The system defined in claim 14, wherein said array of detectors is disposed intermediate said first and second sources.

23. The system defined in claim 14, wherein said first and second sources comprise light emitting diodes.

24. The system defined in claim 14 wherein said means operative for computing the ratio includes means operable to remove the effects on said signals of ambient light on said detectors.

25. A system for determining the presence and position of a seat occupant in a vehicle and providing an electrical indication thereof comprising:

(a) a first light source disposed in said vehicle a certain distance from said seat and operative for illuminating said seat and an occupant therein;

(b) a second light source disposed a distance from said seat virtually different from said certain distance and operative for illuminating said seat and occupant;

(c) a plurality of photodetectors disposed to each receive light reflected from said occupant and operative for generating an electrical signal indicative of the intensity of said received light;

(d) means operable for alternately energizing said first and second sources;

(e) means operative for storing the values of said generated signal of each detector for each illumination;

(f) means operative for computing the ratio of said stored values of said signal for said first and second source illumination for each detector;

(g) means operative for computing said occupant distance from each of said detectors for each of said computed signal ratios; and,

(h) means operative for mapping said computed distances and operative for providing said electrical indication of occupant presence and an image of said position.

26. The system defined in claim 25, wherein said second light source includes means forming a virtual image of said second source, said means selected from the group consisting of a lens and a mirror.

27. A method for determining the presence and position of a seat occupant in a vehicle and providing an electrical image thereof comprising:

(a) disposing a plurality of photodetectors for detecting light reflected from said occupant and generating an electrical signal indicative of the intensity of the reflected light detected by each of said detectors;

(b) disposing a first source of light a certain distance from said target for illuminating said seat and occupant;

(c) disposing a second source of light a distance from said seat virtually different from said certain distance for illuminating said seat and occupant with said second source;

(d) alternately energizing said first and second source and illuminating said seat and occupant;

(e) focusing light from said first and second source reflected from said occupant onto said detectors;

(f) sequentially storing the values of said generated electrical signals for each of said alternating energizations; and,

(g) computing the ratio of said generated signal values for each detector for each alternate energization and computing the distance of said occupant from said detector and mapping said computed distances and generating an image of said occupant position.

28. The method defined in claim 27, further comprising generating a suppression signal when said image shows an out-of tolerance occupant position and applying said suppression signal for preventing energization of an air bag inflator.

29. The method defined in claim 27, wherein said step of sequentially storing includes converting from analog to digital.

30. A system for optically ranging an object comprising:

(a) at least one photodetector disposed to receive light reflected from said object and operable to generate an electrical indication of the intensity of said received light;

(b) a first source of light disposed a certain distance from said object and operable upon energization to illuminate said object;

(c) a second source of light disposed a distance virtually different from said certain distance from said object and operable upon energization to illuminate said object;

(d) means operable to store the value of said electrical indication for each illustration of said object by said first and second source of light; and,

(e) means operable to compute the ratio of said stored values of said electrical indication and operable to compute the range of said target from said ratio.

31. The system defined in claim 30, wherein said at least one photodetector includes a plurality of photodetectors.

32. The system defined in claim 30, wherein said first and second light sources emit light selected from the group consisting of wavelengths in the range of about 350 to 14000 nanometers.

33. A method of optically ranging and imaging an object comprising:

(a) disposing a plurality photodetectors for receiving light reflected from said object and generating an electrical signal indicative of the intensity of the received light;

(b) providing a source of light and directing and framing light from said source to said object alternately from a real source and from a virtual source a significantly different distance from said object than said real source;

(c) storing values of said electrical signal for each of said plurality of photodetectors;

(d) computing the ratio of said values for sets of real and virtual frames and computing the object range for each ratio;

(e) mapping the computed object ranges for each of said plurality of photodetectors and imaging said object.

34. The method defined in claim 33, wherein said step of framing includes shuttering.

35. The method defined in claim 33, wherein said step of alternately directing includes reflecting light from a mirror.

36. The method defined in claim 33, wherein said step of alternately directing includes passing light through a lens.

37. The method defined in claim 33, wherein said step of framing includes rotating a shutter.

Fig.1

Fig.2

Fig.3

Fig.4

Fig.5

Fig.6

Fig.7

Fig.8

**Fig.9**

**Fig.10**

**Fig.11**

Fig.12

18

ACTIVE
CMOS
PIXEL
ARRAY

VIDEO
OUT

Y
X

Fig.13

18'

POLYSILICON

PASSIVE
CMOS
PIXEL
ARRAY

Y
X

```
RECORD IMAGE
WITH AMBIENT      — 60
LIGHT

      ↓

IMAGE             — 62
FILTERING

      ↓

STROBE            — 64
"NEAR" LIGHT
(L1)

      ↓

RECORD IMAGE      — 66
WITH "NEAR" LIGHT
(L1)

      ↓

IMAGE             — 68
FILTERING

      ↓

70 — STROBE
"FAR" LIGHT
(L2)

      ↓

72 — RECORD IMAGE
WITH "FAR" LIGHT
(L2)

      ↓

74 — IMAGE FILTERING

      ↓

76 — INTENSITY RATIO
CALCULATIONS
USING IMAGES
TAKEN

      ↓

78 — MAP
CALIBRATION
DATA WITH RATIO
DATA

      ↓

80 — DEPTH MAP
```

CALIBRATION DATA IS OBTAINED
DURING MANUFACTURING

CALIBRATION DATA    — 79

Fig.14

CAR STARTED ⌒100

INFORMATION ABOUT THE
PHYSICAL LOCATION OF THE AT
RISK ZONE

ILLUMINATION ADJUSTMENT ⌒102

AT RISK ZONE DATA

⌒105

⌒104

DEPTH MAPPING

⌒106

CHECK AT-RISK
ZONE FOR VIOLATIONS        NO

YES

108 ⌒ SEND SIGNAL
RECOMMENDING AIRBAG
SUPPRESION

**Fig.15**

Fig.16